# EUROPEAN PATENT SPECIFICATION

(11) **EP 1 025 064 B1**
(45) Date of publication and mention of the grant of the patent: **11.05.2005**
(21) Application number: 98937883.1
(22) Date of filing: 20.07.1998
(51) Int. Cl.: C05F 17/02, C05F 9/02

(54) **IMPROVEMENTS TO MECHANICAL COMPOSTING**
VERBESSERUNGEN BEI DER MECHANISCHEN KOMPOSTIERUNG
AMELIORATION CONCERNANT LA PRODUCTION MECANIQUE DE COMPOST

(30) Priority: 18.07.1997 NZ 32837397
(43) Date of publication of application: 09.08.2000
(73) Proprietor: VCU Technology Limited, Penrose, Auckland 1006 (NZ)
(72) Inventor: BROWN, Paul, Penrose, Auckland (NZ); WILLSON, Graham Fairlie, Nelson (NZ)
(74) Representative: Dixon, Philip Matthew
(86) International application number: PCT/NZ1998/000107
(87) International publication number: WO 1999/003799

(56) References cited:
- GB-A- 2 101 577
- US-A- 4 062 770
- US-A- 4 135 908
- US-A- 4 184 269
- US-A- 4 482 633
- REUTER BUSINESS BRIEFING AND THE NELSON MAIL, 19 July 1997, New Zealand, ANNE CLARK, "Compost System Turns Up the Heat in Australia", page 4.

## Description

### FIELD OF THE INVENTION

The invention relates to improved composting and particularly to an improved mechanical composting machine or system.

### BACKGROUND TO THE INVENTION

At present biomass and, in particular food waste, wood waste, wood chips, sewage sludge and even some hazardous wastes and other materials are difficult to handle particularly in bulk.

A number of composting systems are currently available for handling this type of material, however most of these are costly and produce odour, which means that the machines must be located in the countryside, away from urban areas.

Composting of biomass has been practised for thousands of years in various forms. Some composting is natural, as occurs in the humification of material decaying by biological action in natural environments. Mankind has made many attempts to enhance and speed up this process using manually assembled heaps of organic matter and, more recently, mechanical devices. This has arisen from the centralisation of populations and the urban concentration of organic wastes from farm produce generally destined for landfill or sewage ponds. This is opposed to the more recent need to reduce landfill volumes because of their cost of establishment and operation and remediation of sewage ponds after their useful life has ended or urban encroachment has made them unpopular.

Recycling organic matter as compost is an important feature of a sustainable future for the planet. Whatever form of fertigation used, organic matter provides essential nutrient holding capacity as it is broken down by soil organisms and this is a feature of all natural and undisturbed ecosystems in their cycles of growth, death and decay.

It is a feature of currently mechanised composting that the materials to be composted are agitated and a large amount of air, and therefore energy, is consumed in these processes. The number of current Patents and prior art are too numerous to detail but we refer to an important compilation of composting processes by Robert T. Haug. "The Practical Handbook of Compost Engineering", Lewis Publishers 1993, ISBN # O-87371-373-7. In this work can be found a complete guide to the science and mechanics of composting including accelerated mechanical systems.

US 4,135,908 discloses a method of aerobic decomposition of organic solids that involves mixing material containing the organic solids to be decomposed with relatively drier material in order to set an upper limit to the dampness of the mixture to be processed. An apparatus for aerobic decomposition is disclosed which includes a decomposition reactor in the form of a tower which tapers in the upward direction. The bottom of the reactor is square or rectangular in cross section and its top is oval or circular in cross section.

US 4,062,770 discloses a method for digesting organic waste and/or sewage sludge by passing it downwardly through a closed vessel while air is passed upwardly through it. The flow of air through the vessel is regulated by measuring the content of CO₂ or O₂ in the exhaust air from the vessel and comparing the measured value with a desired value. Similarly, the moisture content of the material being digested is measured in at least two spaced locations and the moisture content is compared with a desired value for determining the amount of water to be supplied into the air flowing into the vessel. In addition, the air supplied to the vessel is heated based on the temperature conditions to be maintained within the vessel. After exhaust air leaves the vessel, its heat and water contents are withdrawn and it is filtered to remove objectionable odors and other noxious matters.

An object of the invention is therefore to provide a low cost composting system suitable for a range of biomass and further, usable as a biofiltration system.

Further objects and advantages of the invention will become apparent from the following descriptions which are given by way of example only.

### SUMMARY OF THE INVENTION

According to a first aspect of the invention there is provided a composting system incorporating a vertical, insulated and parallel sided composting apparatus with one or more similar chambers for bacterial and fungal breakdown of biodegradable materials,
characterised in that a rate of an air flow provided by naturally induced upward draft due to the energy retained in the composting biomass by said insulation matches biological oxygen demand plus an excess of between three and seven percent, a base of the or each chamber being fitted with a mechanical compost removal mechanism through which said air flow is induced and output is regularly removed.

According to another aspect of the invention there is provided a method of composting biodegradable waste material utilising a plug flow principle including:
inducing low air flow rates through a compost pile using column energy;
utilising high temperature pyro/thermopylic micro-organism activity in the compost pile;
retaining pile energy above stoichometric levels by controlling the induced air flow;
utilising evolved gas extraction in the compost pile;
maintaining constant biofilm maintenance by combined cycle anaerobic/aerobic operation; and
removing the biomass material at regular intervals.

Operation of the composting system is continuous and operates on a plug flow principle using controlled shrinkage of biomass materials during their descent through the vertical chamber such that the effects of pressure on the walls of the chamber means that straight sided walls can be used instead of negatively inclined walls as is commonally known in the art and this simplifies construction methods and reduces costs.

The system is hereinafter referred to as a VCU or Vertical Composting Unit.

A second chamber if included can be used for compost maturation and operates in the same manner as the first chamber or, with modular configuration, many individual units can be run in parallel with one feed system.

The base of each compartment is fitted with a plenum and grate system to control air injection and removal of daily output.

Retained pile energy (7.8 G Joules in a 65m3 VCU) induces air intake above stoichometric levels. A naturally induced excess air rate and evolved gas is controlled by a fan with integral condenser/scrubber for condensate removal and odour control assurance wherever this might be required or mandated by legal requirements.

The continuous-flow vertical composting tower with the insulated thermic pile is advantageously held clear of the ground, freely allowing air induction through the base of the tower, at rates close to the metabolic requirement of the bacteria in the pile, (the stoichiometrically determined oxygen requirement). The tower can be mounted on a plinth or open ended supporting structure, or over an over cavity to achieve this.

The VCU is weather sealed and vermin proof. Low output gas rates reduce scrubber size and cost and increases odour removal efficiency. Odour levels in tests are typically 1-2DT (Dilutions to Threshold) in the stack.

The biomass material requires no agitation, considerably reducing odour potential. Harnessing the lowest air rates in any modern in-vessel system known to the applicants, the VCU promotes high activity of pyrohpilic and thermophilic bacteria and fungi with both aerobic and anaerobic activity occurring simultaneously. The normally smelly gases produced by anaerobic activity are used as food by the high temperature thermophylic and pyrophylic bacteria in the upper zones thus allowing the VCU to filter itself of odours.

The VCU allows for the maintenance of an active moisture bound biofilm from input to output (typically 45-50% w/w) which prevents the possibility of pyrolysis and encourages microbe activity. This makes it especially efficient for processing green wastes combined with food wastes or sewage sludge.

The term "biofilm" as used herein means a thin film of water coating a discrete medium. Organic molecules in gas phase are adsorbed to the medium via the biofilm in which micro-organisms can live and consume the organic molecules in a process called "biofiltration".

Low air flow reduces the cooling effect of incoming air in the bottom layers giving high efficiency for effective working heights.

High induced air rates commonly used render the bottom levels of a vertical thermic pile ineffective thus adding to the height of the column for productive outputs. High induced air rates further increase the velocity of the gases through the column which leads to the entrainment and emission of bioaerosol particulates and smelly off-gas.

A second chamber (larger installations) is designed for compost maturation and operates on the same principles as the first chamber. Being modular, the system can be run so that one chamber feeds another for purposes of compost maturation. This method may be required on difficult combinations of biomass inputs or in cases of soil remediation. Such slow cycles become split between two VCU's in series to avoid excessive compaction of material.

A gated walking floor passes material down from processing in a controlled daily cycle.

The composting system is continuous giving a daily cycle of input and output activities for staff (2 staff up to 40m3/D output). The VCU produces compost ready for use in 14 days but can be used as an accelerator (7 - 10 days) where windrow and subsequent pile turning are viable (80-200m3/D with present designs).

The major advantage of the VCU is the ability to site the system closer to urban areas reducing collection and disposal costs and enhancing sales of finished products. It also enables the use of corporate, commercial and institutional units on-site.

The VCU uses the "insulated" pile energy to "induce draft" to the "plug flow" thermic pile column. In larger sizes the pile energy amounts to several thousand gigajoules. The heat energy is enough to induce the "appropriate draft" via the inlet manifold, (controlled at "app. Draft plus 3-7% average"). The VCU principle is to extract only the evolved gas from the chamber processes, along with the small amount of naturally induced excess air.

Tests by the New South Wales Environmental Protection Authority show 3-7% excess air without the fan operating.

The applicants test results have shown that there are advantages in allowing anaerobic pockets of activity to develop during shrinkage/compaction processes in the vertical pile. This provides extra food sources for aerobic bacteria capable of adsorbing this "food" in the gas phase or as dissolved in the biofilm. Particular gases formed by mesophilic bacteria and anaerobes are H₂S and CH₄ (hydrogen sulphide and methane) which are gases that normally lead to composting systems smelling and causing nuisance.

Furthermore, condensation on the inside of the vessel roof drops back into the composting biomass sustaining an active biofilm within the composting matrix. While rendering an output of higher moisture content than conventional systems, this biofilm serves two important functions. Firstly it allows an active moisture/solids interface for bacteria and fungi, including anaerobic bacteria, down to the outlet. Secondly it allows an active moisture/gas-flow interface for those aerobic bacteria as mentioned above which obtain their food either in a "gas phase" at the surface of this biofilm or as dissolved within it. This action renders the process virtually completely self-filtering in respect of odours.

Conventional processes try to keep temperatures at under 65 - 70°C, using large volumes of air. This cools the microbial processes, retarding the beneficial high temperature micro-organisms and produces large amounts of off-gas from intermediate anaerobic reactions. It is this action which makes odour clean up issues much larger and harder to control. The introduction of large amounts of excess air renders a vertical in-vessel composting system inefficient in its lower column section while requiring large amounts of energy.

The applicants computer model (Table 1.) predicts accurately the energy process and the amount of air required. This has been measured on a prototype unit by the New South Wales EPA.

Further aspects of the invention which should be considered in all its novel aspects will become apparent form the following description.

### DESCRIPTION OF THE DRAWINGS

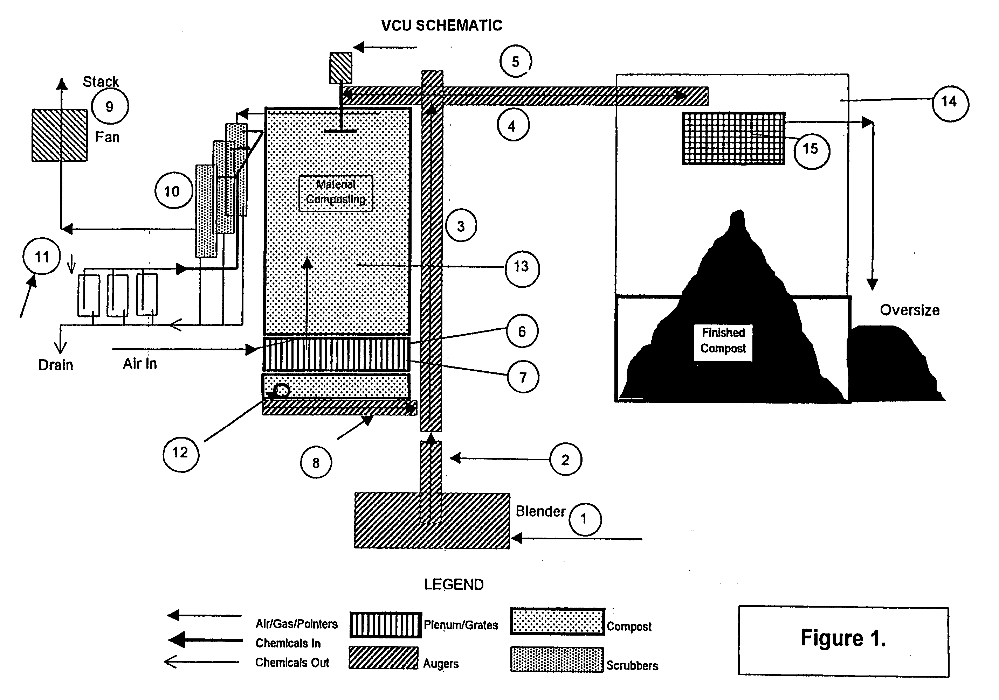

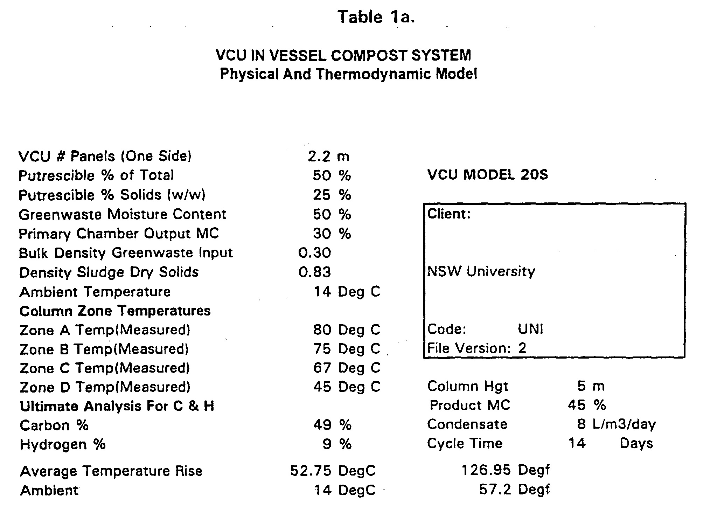

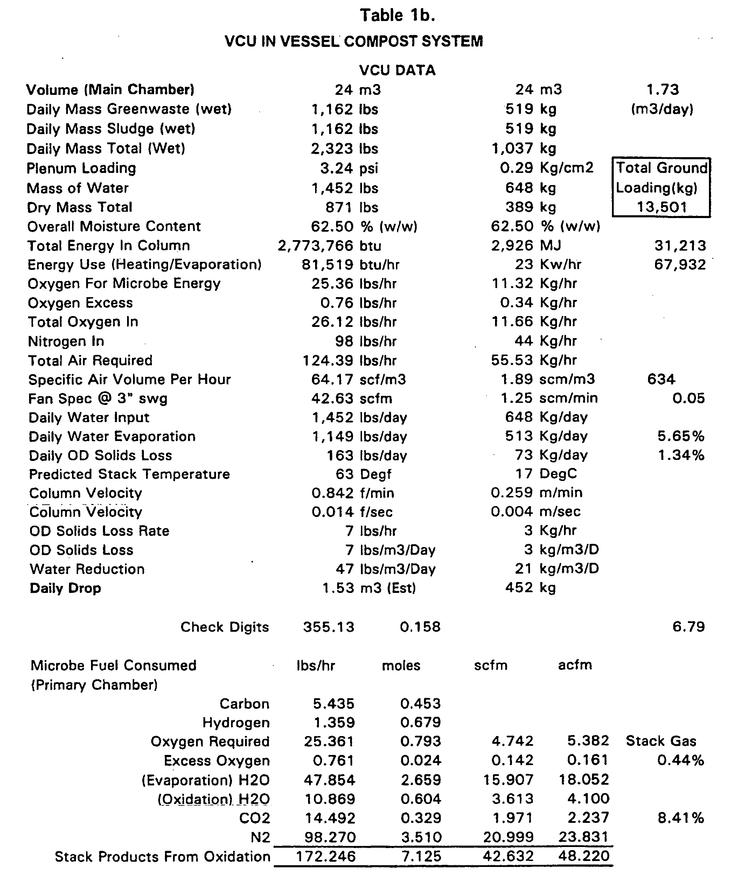

The following description will be with reference to a test compost unit an example of which is shown schematically in the accompanying drawing (Figure 1).

### DESCRIPTION OF PREFERRED EXAMPLES

The specifications for such a unit (Figure 1) are set out below:
**Typical Commercial Specifications:** (Smaller Domestic and Institutional units not listed)
Sizes: Daily production rates (m3) of : 0.2, 1.0, 5.0, 25, 50, 100 Accelerated production rates (m3) of : 0.5, 2.0, 10, 50, 200
Chamber Sizes: 5, 20, 50, 250, 500, 1000
Air Use: Typically 1.25 scm/min (42scfm)
Power Usage:

| | |
|---|---|
| Air | 10 watts/m3 |
| Feeding/Shredder | 950 watts/m3 |
| Controls | 5 watts/m3 |

Feed System: Materials to be processed are placed into a blender (1) to be mixed together with any additives. Blended material is then sent by the stuffing auger (2) to vertical (3) and transverse (4) augers. Input is distributed evenly by rotating disk (5). Automatic level control allows enough space to empty the feed system. The feed hopper is closed off after filling to maintain negative pressure throughout the system and avoid residual odours. A small batch of fresh green waste can be run through the system to scarify and clean out the blender and auger tubes.
Inputs: Food waste, sewage sludge, some hazardous wastes, with bulking agent (shredded green waste or wood chips) to a maximum of 85% food waste/sludge w/w. Moisture content range 60% to 80%. Humic acid 60ml/m3 with Calcium Ammonium Nitrate at 150gm/m3, variable depending on percentage of food waste. Gypsum at 150gm/m3. Additives vary according to feed stock analysis. Magnesium Sulphate (Kieserite) is sometimes recommended.
Extraction Systems: Oscillating hydraulically operated grates (6) above plenums (7) which open for discharge into storage bin (not shown) underneath. A larger single chamber accelerator unit can have wheel loader access bins underneath. Larger systems can also have a floor sweep auger (12) and return auger (8) for discharge to a screening and oversize return arrangment, and a screening and oversize return arrangement, and finished compost storage as shown in Figure 1.
Cycle Times: 7 to 28 days depending on fineness of product required and method of maturation.
Outputs: Self-mulching compost (unscreened) or graded in separate screening plant. Oversize can be used as additional bulking agent in recycle or pulverised. Compost yield at 10mm is generally volume 85% with shredded green waste, + 10mm wood chip bulking agents are recycled after screening. A system with a second maturation chamber gives product ready for use without windrow curing.
In Figure 1 is shown a bunker (14). The bunker may be covered on three sides with a roof. The bunker (14) may include a screen and optional grinder (15).
Operating Temps:

| Primary Chamber (12) | |
|---|---|
| Top | 80 - 85°C |
| Middle | 60 - 70°C |
| Bottom | 45 - 50°C |

Filtration: Largely self-filtering through compost base material combined with very low air rates. Odour potential is 1-2DT at the fan outlet (9) when operating on food waste/green waste. (Gaussian Dispersion Distance Model) - result is therefore well below human detection thresholds at a distance of 20 metres.
Outlet gas is optionally passed through a triple scrubber (10) containing NaOH, NaOCl, CH3COOH and water. Scrubbers (10) can be standard packed spray towers. Scrubber fluids are pump recirculated with tanks (11) refilled as activity is neutralised by carry over. Economic tank sizes give approximately 12-18 months activity and are sealed and locked. Disposal is environmentally benign since chemicals are used to neutralise each other to pH 7. This cost effective gas scrubbing system needs only to be used on potentially aggressive bioremediation processing.
Normally a simple condensate filter is used. This is because the stack gases are so small compared with other systems that they have a very large dilution factor on release to atmosphere. Should any operational errors produce smelly gases, the effect would be rapidly dispersed into ambient air without noticeable effects to those close by.
Condensates: Test traps-are-located in the condensers. Condensate is clear and almost tasteless at pH 5 (average) with no pathogens or nitrates and suitable for irrigation or storm water disposal (Cawthron Institute Tests and NSW EPA Tests).
Leachates: None unless input moisture exceeds 80%. Leachate pH 6.5 with some brown humus solids and some nitrate.
Biological oxygen demand (BOD) is negligible. Leachates are easily controlled by input management but can be contained for recycle if they occur.
Pathogens: Assumed to be pathogen free and pathogen resistant at 14 day minimum composting period because of composting conditions. Pathogen screens by the Cawthron Institute and NSW EPA confirm zero pathogens.
Toxicity Index: 90% root length (AS3743).
Germination: 99% (AS3743) (applies to system with maturation chamber producing finished compost).
Weed Seeds: Zero survival after 14 days.
Post Curing Time: Ready to use in 14 to 28 days depending on unit location and maturation requirements. The VCU can be used for accelerated breakdown of food waste and sludge (7-10 days) but a large area may be required for windrowing for post curing. This type of use of the system means the operation can not be located close to urban areas.
Staffing: Two persons up to 500m3 model.

The applicants have found in operating the test unit (Typical of Fig. 1) that a very large volume of food scraps or sludge can be mixed with shredded green waste. Food slops bring the moisture content of the mix to an ideal level (green waste is generally less than 50% moisture and food wastes up to 90%). Large food scraps such as potatoes, pumpkins, onions etc. need to be shredded. This drastically reduces bulk, increases surface area, and allows a mix to contain up to 80% food wastes/sludge by weight without greatly increasing overall volume. This is because the mashed up food waste occupies most of what would otherwise be void space between shredded green waste particles. Higher than 80% moisture can sometimes lead to a small amount of leachate (pH 6.5) in the bottom plenum 8 and a slightly damper product. This moisture flashes off very quickly when the material is withdrawn (45 - 55°C) and has a natural earthy odour. Even with food scraps there is little ammonium nitrate or sulphurous odour detectable in the compost. By controlling inputs and additives, the main cation predominating is calcium without detectable losses of nitrogen. Nutrient analysis (AS3743) is high for all nutrients and trace element balance but depends on the combination and analysis of material fed into the system.

The fungal growth is prolific in the bottom zones because of the moist conditions provided. The applicants have identified both iron and sulphur converting fungi. The applicants believe, and will test further, the premise that extended high temperature zones exhibit favourable processing conditions and that there may be some pyrophyllic decomposer organisms which have not yet been identified. These research projects will be conducted at the University of NSW.

Initial discussion with Cawthron Institute in respect of testing these fungi indicate that the VCU does produce an enhanced environment for pyro/thermophyles, hitherto not typed, which aggressively attack ligno-cellulosic structures in these ideal conditions provided by the VCU.

A computer model has been used and set out on attached drawing labelled Table 1 is the physical thermodynamic model for the example of a single chamber module version VCU shown in Figure 1.

Advantages of the present invention are as follows:
Enclosed insulated vertical pile;
Plug flow principles;
Insulated pile energy;
Column pile energy induced draft,
Low air rates;
High temperatures - utilising pyro/thermophylic micro-organism activities
Evolved gas extraction only;
Constant biofilm maintenance;
Low energy demand/consumption;
Small footprint/land use to production capacity;
Combined cycle anaerobic/aerobic operation;
Negligible odour and emission production;
Modular design --- several chambers with one feed/discharge system.

Key Principles embodied in the invention:
Low air rates, high temperatures;
Low power consumption;
Low operating costs;
Small footprint and land use;
Negligible odour (urban locations possible);
Column energy air induction;
Fan removal of evolved gases only;
Modular design: one feed system for several units.

Where in the description a particular mechanical or other integer has been described it is envisaged that their alternatives are included as if they were individually setforth.

Particular examples of the invention have been described and it is envisaged that improvements and modifications can take place without departing from the scope thereof.

Thus by this invention there is provided an improved mechanical composting unit.

## Claims

1. A composting system incorporating a vertical, insulated and parallel sided composting apparatus with one or more similar chambers for bacterial and fungal breakdown of biodegradable materials, **characterised in that** a rate of an air flow provided by naturally induced upward draft due to the energy retained in the composting biomass by said insulation is stoichiometrically matched to biological oxygen demand plus an excess of between three and seven percent, a base of the or each chamber being fitted with a mechanical compost removal mechanism (6) through which said air flow is induced and output is regularly removed.

2. A composting system as claimed in claim 1 wherein operation can be continuous with composting biomass descending in a plug flow manner using controlled shrinkage and wall pressure relief due to biological ablation of material, without internal agitation by mechanical means, during its descent through the one or more vertical chambers, combined with periodic removal of output.

3. A composting system as claimed in claim 1 or claim 2 in which the naturally induced excess air and off gases evolved through biological activity are modulated by a fan with integral condenser/scrubber (10) for odour control assurance and condensate removal from the off gas stream for disposal or reuse within the one or more chambers to maintain minimum average pile moisture levels of between forty five and fifty percent (w/w), thereby securing the maintenance of a biofilm or matrix particulate moisture coating providing habitat for microorganisms capable of high temperature gas phase conversions as a food source in high temperature zones and supporting fungal activity in lower temperature zones.

4. A composting system as claimed in Claim 3 wherein the majority of high temperature gas phase conversions at the interface of the gas/biofilm are of anaerobically produced odorous gases and are carried out by aerobic bacteria of the pyrophilic and thermophilic groups which obtain their oxygen directly from the passing gas stream or as oxygen dissolved within the biofilm, resulting in undesirable odours being consumed within the composting mass and thereby removed from the exhaust gas before release.

5. The composting system of any one of Claims 1 to 4 wherein the rate of said air flow is sufficiently low to provide high thermal efficiency at the effective working height and to thereby promote fungal attack of remaining organic matter in the lower temperature bottom layers.

6. A method of composting biodegradable waste material including:
providing a vertical, insulated and parallel sided composting tower with one or more similar chambers suitable for bacterial and fungal breakdown of biodegradable materials; the method further including
inducing, by naturally induced upward draft due to the energy retained in the composting biomass by said insulation, an air flow at a rate stoichiometrically matched to biological oxygen demand plus an excess of between three and seven percent,
providing a mechanical compost removal mechanism (6) through which said air flow is induced and;
regularly removing output from said removal mechanism.

7. A method of composting biodegradable waste material as claimed in Claim 6, including:
providing suitable habitat within the upper level of the compost pile for pyrophilic and thermophilic micro-organisms through biofilm maintenance and moisture content control allowing combined aerobic and anaerobic activity within the pile without undesirable odours escaping to atmosphere; and
regularly inputting and removing material with cycle retention times in accordance with output product characteristics and the degree of product maturity required.

8. A method of composting biodegradable waste as claimed in Claim 6 or 7 including the step of maintaining a matrix coating moisture bound biofilm from input to output which prevents the possibility of pyrolysis and encourages high temperature micro-organism activity.

9. A method of composting biodegradable waste material as claimed in any one of Claims 6 to 8 wherein the rate of said air flow is sufficiently low to provide high thermal efficiency at the effective working height and to thereby promote fungal attack of remaining organic matter in the lower temperature bottom layers.

## Patentansprüche

1. Kompostiersystem, das eine vertikale isolierte und parallele Seiten aufweisende Kompostiervorrichtung mit einer oder mehreren ähnlichen Kammern zur bakteriellen und durch Pilze hervorgerufenen Zersetzung von biologisch abbaubaren Materialien umfasst, **dadurch gekennzeichnet, dass** ein Durchsatz bzw. eine Rate eines Luftstroms, der durch einen natürlich hervorgerufenen aufwärts gerichteten Luftzug aufgrund der in der kompostierenden Biomasse durch die Isolierung gehaltenen Energie bereitgestellt ist, stöchiometrisch an den biologischen Sauerstoffbedarf zusätzlich eines Überschusses zwischen drei und sieben Prozent angepasst ist, ein Sockel der oder jeder Kammer mit einem mechanischen Kompostentfernungsmechanismus (6) ausgestattet ist, durch den der Luftstrom hervorgerufen und Ausstoß regelmäßig entfernt wird.

2. Kompostiersystem nach Anspruch 1, bei dem der Betrieb bzw. der Vorgang fortlaufend sein kann, wobei die kompostierende Biomasse unter Verwendung von geregelter bzw. gesteuerter Schrumpfung und Nachlassen des Wanddrucks aufgrund von biologischer Ablation bzw. Entfernung von Material in der Art einer Pfropfenströmung ohne internes Rühren bzw. Umwälzen durch mechanische Mittel während ihres Herabsteigens durch die eine oder die mehreren vertikalen Kammern kombiniert mit periodischem Entfernen des Ausstoßes herabsteigt.

3. Kompostiersystem nach Anspruch 1 oder 2, in dem die natürlich hervorgerufene Überschussluft und durch biologische Aktivität entwickelten Abgase durch einen Ventilator bzw. Lüfter mit integriertem Kondensator/Wascher (10) zur Sicherung der Geruchsregelung und Entfernung des Kondensats aus dem Abgasstrom zur Entsorgung oder Wiederverwendung innerhalb der einen oder den mehreren Kammern reguliert bzw. angepasst sind, um minimale durchschnittliche Feuchtigkeitsniveaus eines Haufens zwischen 45 und 50 Prozent (w/w) bzw. Gewichtsprozent zu erhalten und dabei das Bestehen eines Biofilms oder einer matrix-partikulären Feuchtigkeitsschicht sicherzustellen, die Lebensraum für Mikroorganismen bereitstellt, die zu Hochtemperatur-Gasphasenumwandlungen als eine Nahrungsmittelquelle in Hochtemperaturzonen fähig sind und Pilzaktivität in niedrigeren Temperaturzonen unterstützen.

4. Kompostiersystem nach Anspruch 3, bei dem die Mehrheit der Hochtemperatur-Gasphasenumwandlungen an der Grenzfläche des Gases/Biofilms aus anaerob erzeugten riechenden Gasen besteht und durch aerobe Bakterien der pyrophilen und thermophilen Gruppen durchgeführt wird, die ihren Sauerstoff direkt aus dem vorbeiziehenden Gasstrom oder als innerhalb des Biofilms aufgelösten Sauerstoff aufnehmen, was darin resultiert, dass unerwünschte Gerüche innerhalb der Kompostmasse aufgebraucht und **dadurch** vor dem Auslassen aus dem Abgas entfernt sind.

5. Kompostiersystem nach einem der Ansprüche 1 bis 4, bei dem der Durchsatz des Luftstromes ausreichend niedrig ist, um einen hohen thermischen Wirkungsgrad in der wirksamen Arbeitshöhe bereitzustellen und dabei einen Pilzbefall des verbleibenden organischen Materials in den Bodenschichten mit niedrigerer Temperatur zu begünstigen.

6. Verfahren zum Kompostieren von biologisch abbaubarem Abfallmaterial, mit den folgenden Schritten:
Bereitstellen eines vertikalen isolierten und parallele Seiten aufweisenden Kompostierturmes mit einer oder mehreren ähnlichen Kammern, die für bakterielle und durch Pilze hervorgerufene Zersetzung von biologisch abbaubaren Materialien geeignet sind, mit den weiteren Schritten:
Hervorrufen eines Luftstroms mit einem stöchiometrisch an den biologischen Sauerstoffbedarf zuzüglich eines Überschusses zwischen drei und sieben Prozent angepassten Durchsatzes, durch einen natürlich hervorgerufenen aufwärts gerichteten Luftzug aufgrund der in der kompostierenden Biomasse durch die Isolierung gehaltenen Energie,
Bereitstellen eines mechanischen Kompostentfernungsmechanismus (6), durch den der Luftstrom hervorgerufen wird, und
regelmäßiges Entfernen von Ausstoß durch den Entfernungsmechanismus.

7. Verfahren zum Kompostieren von biologisch abbaubarem Abfallmaterial nach Anspruch 6, mit den weiteren Schritten:
Bereitstellen eines für pyrophile und thermophile Mikroorganismen geeigneten Lebensraums innerhalb des oberen Niveaus des Komposthaufens durch Erhaltung des Biofilms und Regelung der enthaltenen Feuchtigkeit, was kombinierte aerobe und anaerobe Aktivität innerhalb des Haufens ohne das Entweichen von unerwünschten Gerüchen in die Atmosphäre ermöglicht, und
regelmäßiges Eingeben und Entfernen von Material mit Durchlaufaufbewahrungszeiten gemäß den Eigenschaften des Ausstoßproduktes und dem Grad der benötigten Produktreife.

8. Verfahren zum Kompostieren von biologisch abbaubarem Abfall nach Anspruch 6 oder 7, das den Schritt des Erhaltens eines Matrix-umhüllenden Feuchtigkeits-gebundenen Biofilms von einer Eingabe zu einer Ausgabe umfasst, der die Möglichkeit der Pyrolyse bzw. der thermischen Zersetzung verhindert und Aktivität von Mikroorganismen bei hoher Temperatur fördert.

9. Verfahren zum Kompostieren von biologisch abbaubarem Abfallmaterial nach einem der Ansprüche 6 bis 8, bei dem der Durchsatz des Luftstroms ausreichend niedrig ist, um einen hohen thermischen Wirkungsgrad in der wirksamen Arbeitshöhe bereitzustellen und dabei Pilzbefall von verbleibendem organischen Material in den Bodenschichten mit niedrigerer Temperatur zu begünstigen.

## Revendications

1. Système de compostage comprenant un appareil de compostage vertical, isolé et à faces parallèles ayant une ou plusieurs chambres similaires destinées à la décomposition bactérienne et fongique de matières biodégradables, **caractérisé en ce qu'**un débit d'un flux d'air fourni par le tirage ascendant naturellement induit en raison de l'énergie retenue dans la biomasse de compostage par ladite isolation est mis en correspondance de manière stoechiométrique avec la demande en oxygène biologique, plus un excédent situé entre trois et sept pourcents, une base de la chambre ou de chaque chambre étant munie d'un mécanisme mécanique de retrait du compost (6) grâce auquel ledit flux d'air est induit et la sortie est régulièrement retirée.

2. Système de compostage selon la revendication 1, dans lequel l'opération peut être continue, avec une biomasse de compostage descendant de manière continue à l'aide d'un rétrécissement contrôlé et d'une limitation de la pression sur les parois due à l'ablation biologique de la matière, sans agitation interne à l'aide d'un moyen mécanique, pendant sa descente dans la ou les chambre(s) verticale(s), combinée avec un retrait périodique de la sortie.

3. Système de compostage selon la revendication 1 ou la revendication 2, dans lequel l'excès d'air et les gaz de dégagement naturellement induits émis au fil de l'activité biologique sont modulés par un ventilateur à l'aide d'un condensateur/d'un épurateur intégral (10) destiné à garantir l'élimination des odeurs et à condenser ce qui a été retiré du flux de gaz de dégagement en vue d'une élimination ou d'une réutilisation dans la ou les chambre(s) afin de maintenir des niveaux d'humidité de piles moyens minimum situés entre quarante cinq et cinquante pourcents (en poids pour poids), assurant ainsi le maintien d'un film biologique ou d'un revêtement d'humidité particulaire matricielle offrant un habitat aux microorganismes capables de conversions en phase gazeuse à températures élevées en tant que source alimentaire dans les zones à températures élevées, et supportant l'activité fongique dans les zones à températures plus basses.

4. Système de compostage selon la revendication 3, dans lequel la majorité des conversions en phase gazeuse à températures élevées au niveau de l'interface entre le gaz et le film biologique est constituée de gaz odorants produits de manière anaérobic et est effectuée par des bactéries anaérobics des groupes pyrophiles et thermophiles qui obtiennent leur oxygène directement auprès du flux de gaz ou à l'aide de l'oxygène dissout dans le film biologique, entraînant la consumation des odeurs indésirables dans la masse de compostage, et leur élimination du gaz d'échappement avant leur libération.

5. Système de compostage selon l'une quelconque des revendications 1 à 4, dans lequel le débit dudit flux d'air est suffisamment faible pour offrir une efficacité thermique élevée au niveau de la hauteur de travail effective, et pour promouvoir ainsi l'attaque fongique des matières organiques restantes dans les couches inférieures à plus faibles températures.

6. Procédé de compostage de déchets biodégradables comprenant :
le fait de prévoir une tour de compostage verticale, isolée et à faces parallèles possédant une ou plusieurs chambres similaires convenant pour la décomposition bactérienne et fongique de matières biodégradables ; le procédé comprenant en outre
le fait d'induire, par un tirage ascendant naturellement induit en raison de l'énergie retenue dans la biomasse de compostage par ladite isolation, un flux d'air à un débit correspondant de manière stoechiométrique avec la demande en oxygène biologique, plus un excédent situé entre trois et sept pourcents,
le fait de prévoir un mécanisme mécanique de retrait du compost (6) grâce auquel ledit flux d'air est induit, et ;
le fait de retirer régulièrement la sortie dudit mécanisme de retrait.

7. Procédé de compostage de déchets biodégradables selon la revendication 6, comprenant :
le fait de prévoir un habitat adéquat dans le niveau supérieur de la pile de compost pour des microorganismes pyrophiles et thermophiles par le biais du maintien d'un film biologique et du contrôle de la teneur en humidité, permettant une activité aérobic et anaérobic combinée au sein de la pile, sans odeur indésirable s'échappant dans l'atmosphère ; et
le fait de fournir et de retirer les matières de manière régulière dans le cadre de cycles de rétention, conformément aux caractéristiques de sortie de produit et au degré de maturité de produit exigées.

8. Procédé de compostage de déchets biodégradables selon la revendication 6 ou 7, comprenant l'étape de maintien d'un film biologique d'humidité faisant office de revêtement matriciel de l'entrée jusqu'à la sortie, qui empêche toute possibilité de pyrolyse et qui encourage l'activité des microorganismes à des températures élevées.

9. Procédé de compostage de déchets biodégradables selon l'une quelconque des revendications 6 à 8, dans lequel le débit dudit flux d'air est suffisamment faible pour fournir une efficacité thermique élevée à la hauteur de travail effective, et pour promouvoir ainsi l'attaque fongique des matières organiques restantes dans les couches inférieures à plus faibles températures.
